(19) Europäisches Patentamt
European Patent Office
Office européen des brevets

(11) **EP 3 779 395 B1**

(12) **EUROPEAN PATENT SPECIFICATION**

(45) Date of publication and mention
of the grant of the patent:
**04.10.2023 Bulletin 2023/40**

(21) Application number: **19776825.2**

(22) Date of filing: **01.03.2019**

(51) International Patent Classification (IPC):
**G01N 1/22** *(2006.01)*   **B01D 45/12** *(2006.01)*
**B04C 5/14** *(2006.01)*   **B04C 5/20** *(2006.01)*
**B04C 5/22** *(2006.01)*   **B04C 9/00** *(2006.01)*
**G01N 27/60** *(2006.01)*   **G01N 27/62** *(2021.01)*
**G01N 15/06** *(2006.01)*   **H01J 49/04** *(2006.01)*
**G01N 15/00** *(2006.01)*

(52) Cooperative Patent Classification (CPC):
**G01N 1/2211; G01N 1/2205; G01N 15/06;
G01N 27/62;** G01N 2015/0046; H01J 49/04

(86) International application number:
**PCT/JP2019/008072**

(87) International publication number:
**WO 2019/187976 (03.10.2019 Gazette 2019/40)**

(54) **FINE PARTICLE ANALYSIS DEVICE, FINE PARTICLE ANALYSIS SYSTEM, AND CLEANING METHOD**

FEINTEILCHENANALYSEVORRICHTUNG, FEINTEILCHENANALYSESYSTEM UND REINIGUNGSVERFAHREN

DISPOSITIF D'ANALYSE DE PARTICULES FINES, SYSTÈME D'ANALYSE DE PARTICULES FINES ET PROCÉDÉ DE NETTOYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2018   JP 2018068083**

(43) Date of publication of application:
**17.02.2021   Bulletin 2021/07**

(73) Proprietor: **Hitachi, Ltd.**
**Tokyo 100-8280 (JP)**

(72) Inventors:
• **KUMANO Shun**
**Tokyo 100-8280 (JP)**
• **NAGANO Hisashi**
**Tokyo 100-8280 (JP)**
• **ITOU Takahiro**
**Tokyo 100-8280 (JP)**
• **MIZUNO Hiroki**
**Tokyo 100-8280 (JP)**
• **NOJIRI Tatsuo**
**Tokyo 100-8280 (JP)**
• **SUGIYAMA Masuyuki**
**Tokyo 100-8280 (JP)**

(74) Representative: **Strehl Schübel-Hopf & Partner
Maximilianstrasse 54
80538 München (DE)**

(56) References cited:
WO-A1-2012/063796      WO-A1-2016/027320
JP-A- H0 576 803       JP-A- H06 129 959
JP-A- H07 294 393      JP-A- H09 103 708
JP-A- H09 311 098      JP-A- 2000 171 357
JP-A- 2000 346 759     JP-A- 2001 181 307
JP-U- S51 123 080

## Description

Technical Field

The present invention relates to a technique of a fine particle analyzer, a fine particle analysis system, and a cleaning method.

Background Art

In the optical field, the environmental field, and other fields, a fine particle substance attached to an object to be inspected is analyzed. In particular, in the environmental field, in order to grasp a state of environmental pollution, there is a demand for an analyzer that measures the attached matter quickly, in real time, and with high sensitivity. In the industrial field, there is a demand for an analyzer that measures components of the attached matter attached to an industrial product quickly, in real time, and with high sensitivity for the purpose of managing a production process and controlling a quality. In the security field, devices that analyze whether fine particles attached to passengers' hands or luggage at airports and the like are dangerous substances are used.

Devices that analyze not only the attached fine particles but also fine particles in the atmosphere have been awaited. For example, components of fine particles such as PM2.5, which is a problem of air pollution, may be analyzed.

For example, PTL 1 discloses an analyzer and an analysis method in which "gas and/or fine particles of matter to be detected that is attached to an object to be authenticated 2 are separated by an airflow from an air supply unit 5, a separated sample is sucked in, and concentrated and collected by a fine particle collection unit 10, and ions of the sample are generated by an ion source unit 21 and subjected to mass analysis by a mass analysis unit 23, and by determining the presence or absence of a mass spectrum derived from the matter to be detected from obtained mass spectra and displaying the result thereof on a display unit 27, the matter to be detected that is attached to the object to be authenticated 2 is detected continuously and promptly in real time with a small number of erroneous reports" (see Abstract).

In addition, for example, PTL 2 discloses an analyzer "provided with a authentication unit that authenticates an object, an air supply unit that jets airflows onto the object from at least two different directions, a collection port that collects gas and/or fine particles separated from the object, an intake unit that sucks in the gas and/or fine particles separated from the object, a flow rate control unit that controls the airflow jetting of the air supply unit and the sucking of the intake unit, a fine particle collection unit that concentrates and collects matter to be detected included in the sucked in gas and/or fine particles, an analysis unit that analyzes the matter to be detected that is introduced from the fine particle collection unit, and an analysis determination control unit that determines whether the matter to be detected is present on the basis of the result of the analysis of the analysis unit"(see Abstract).

In PTLs 1 and 2, a cyclone dust collector is used as a fine particle concentration and collector, and a heating filter is disposed at an end of the cyclone dust collector. In the cyclone dust collector, sucked gas and fine particles are separated, and the fine particles fall to a lower end of a cyclone. The fallen fine particles are gasified in a heating filter portion, and the gas is introduced into the analysis unit.

When such a system is operated for a long time or a large number of fine particles are collected, the fine particles may be deposited on the heating filter or an inner wall of the cyclone dust collector. When fine particles are deposited on the heating filter, an issue arises that even if new fine particles fall onto the deposited fine particles, heat is not transmitted and the fine particles do not evaporate, or vaporized gas is adsorbed by the deposited fine particles and does not reach the analysis unit. Also, when fine particles are deposited on the inner wall of the cyclone dust collector, an issue arises that the newly collected fine particles cannot properly fall onto the heating filter due to an influence of the deposited fine particles. Such issues lead to a decrease in sensitivity of the system. Furthermore, in order to clean the filter and the cyclone dust collector, the device is disassembled, and the analysis is stopped during cleaning.

Also, for example, PTL 3 discloses a cyclone dust collector and a dust collection method in which "a dust collection filter 9 is provided substantially concentrically in a cyclone cylinder 1 having a gas inlet 3 connected to a dust removing gas suction hose 5 and an outlet 6 connected to an outlet hose 8, in such a dust collection device 50, a pulse jet tube 18 that intermittently supplies a pressurized gas for removing dust adhering to a surface 9a of the dust collection filter 9 is disposed in an internal space 11 of the dust collection filter 9, the pulse jet tube 18 or the dust collection filter 9 may be rotatably attached such that a facing portion where the pulse jet tube 18 and the dust collection filter 9 face each other can be changed, and when the pressurized gas is jetted from the pulse jet tube 18 to an inner surface of the dust collection filter 9 during the dust collection, dust attached to the surface 9a can be removed, and a dust collecting action can be restored without stopping the dust collection device 50" (see Abstract).

In PTL 3 in which a cyclone dust collector is used for a vacuum cleaner, unlike PTLs 1 and 2, an air nozzle that cleans an inner cylinder of the cyclone dust collector is introduced into the inner cylinder of the cyclone dust collector. In the cyclone dust collector of PTL 3, the inner cylinder has a filter shape. PTL 3 discloses a method in which when dust is deposited on the inner cylinder, the dust is blown off by jetting gas from the air nozzle inserted into the inner cylinder.

Citation List

Patent Literature

PTL 1: WO 2012/063796 A
PTL 2: WO 2016/027320 A
PTL 3: JP H05-076803 A

PTL 2 discloses an analyzer apparatus with the features in the preamble of Claim 1. A further analyzer apparatus related to the one of the present invention is disclosed in JP S51 123 080 U.

Summary of Invention

Technical Issue

As described above, the techniques described in PTLs 1 and 2 collect/concentrate and analyze fine particles adhering to an object to be inspected and fine particles existing in the atmosphere by the cyclone dust collector. In such a system, there is an issue that attached matter is deposited in the cyclone dust collector, particularly on the heating filter, and the device is stopped and disassembled for cleaning.

The present invention has been made in view of such a background, and an object of the present invention is to clean the inside of a fine particle analyzer without stopping and disassembling the fine particle analyzer.

Solution to Issue

In response to the above issue, the fine particle analyzer and the cleaning method of the present invention are defined in the respective independent claims. Further advantageous features are set out in the dependent claims.

Advantageous Effects of Invention

According to the present invention, the inside of the fine particle analyzer can be cleaned without stopping and disassembling the fine particle analyzer.

Brief Description of Drawings

[FIG. 1] FIG. 1 is a schematic diagram of a fine particle analysis system 100 according to a first embodiment (before introducing a cleaning gas), which is not an embodiment of the invention but an example useful for its understanding.
[FIG. 2] FIG. 2 is a schematic diagram of the fine particle analysis system 100 according to the first embodiment (after introducing a cleaning gas), which is not an embodiment of the invention but an example useful for its understanding.
[FIG. 3A] FIG. 3A is a photograph of a primary filter 16 before cleaning by a method of this embodiment.
[FIG. 3B] FIG. 3B is a photograph of the primary filter 16 after cleaning by the method of this embodiment.
[FIG. 4] FIG. 4 is a flowchart showing a procedure of cleaning processing performed in the first embodiment (first method).
[FIG. 5] FIG. 5 is a flowchart showing a procedure of cleaning processing performed in the first embodiment (second method).
[FIG. 6] FIG. 6 is a diagram showing a configuration of a fine particle analysis system 100a according to a second embodiment, which is not an embodiment of the invention but an example useful for its understanding.
[FIG. 7] FIG. 7 is a diagram showing a configuration of a fine particle analysis system 100b according to a third embodiment, which is not an embodiment of the invention but an example useful for its understanding.
[FIG. 8] FIG. 8 is a diagram showing a configuration of a fine particle analysis system 100c according to a fourth embodiment, which is an embodiment of the invention.
[FIG. 9] FIG. 9 is a diagram showing a configuration of a fine particle analysis system 100d according to a fifth embodiment, which is not an embodiment of the invention but an example useful for its understanding.
[FIG. 10] FIG. 10 is a diagram showing a configuration of a fine particle analysis system 100e according to a sixth embodiment, which is not an embodiment of the invention but an example useful for its understanding.

Description of Embodiments

Hereinafter, aspects (hereinafter, referred to as "embodiments") for understanding and for implementing the present invention will be described with reference to the accompanying drawings. In the embodiments, specific examples based on the principle of the present invention are shown, but these are for understanding the present invention, and are not used for interpreting the present invention in a limited manner. Modifications resulting from combinations or replacements of the following embodiments with known techniques are also included in the scope of the present invention. In all the drawings for describing the embodiments, components having the same functions are denoted by the same reference signs, and a repeated description thereof will be omitted.

<First Embodiment>

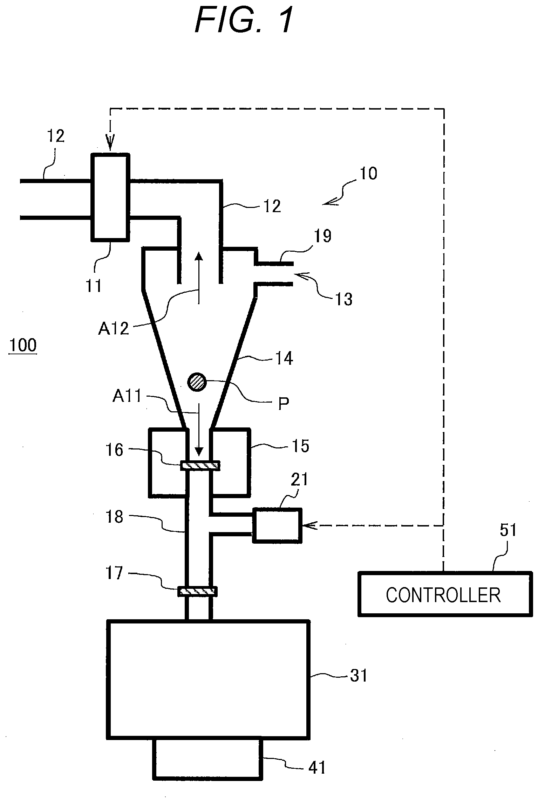

First, a first embodiment, which is not an embodiment of the invention but an example useful for its understanding of the present invention will be described with reference to FIGS. 1 to 5.

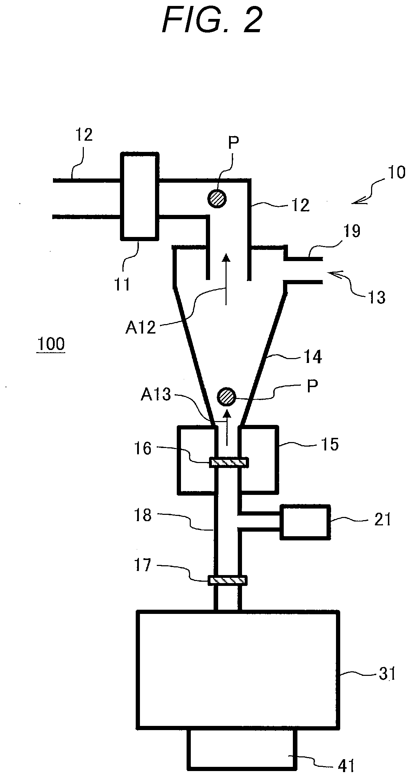

FIG. 1 is a schematic diagram of a fine particle analysis system 100 according to the first embodiment (before introducing a cleaning gas). FIG. 2 is a schematic diagram of the fine particle analysis system 100 according to the first embodiment (after introducing the cleaning gas).

As shown in FIG. 1, the fine particle analysis system 100 includes a fine particle analyzer 10, a data processor 41, and a controller 51.

As shown in FIG. 1, the fine particle analyzer 10 includes an intake device (intake unit) 11, a cyclone dust collector (cyclone dust collection unit) 14, a heater 15, and a primary filter (filter portion) 16. Further, the fine particle analyzer 10 includes a secondary filter 17, a cleaning gas introduction device (cleaning gas introduction unit) 21, and a gas analyzer (gas analysis unit) 31. The primary filter 16 is a heating filter. Among the above, the cleaning gas introduction device 21 is a characterizing part of this embodiment. The data processor 41 is connected to the gas analyzer 31. Then, the data processor 41 obtains data from the gas analyzer 31 and analyzes the obtained data.

The cyclone dust collector 14 has a fine particle suction port (fine particle suction portion) 13. External gas (such as air) is sucked into the cyclone dust collector 14 from the fine particle suction port 13 by intake of the intake device 11 connected to the cyclone dust collector 14. For example, when an object to be inspected (not shown) such as an IC card is brought close to the fine particle suction port 13, fine particles P attached to the object to be inspected are sucked from the fine particle suction port 13. The sucked fine particles P are sucked through an introduction pipe 19 into the cyclone dust collector 14. As in PTLs 1 and 2, a gas may be sprayed from an air nozzle provided to the fine particle suction port 13 to spray the gas on the object to be inspected, thereby separating the fine particles P, and the separated fine particles P are sucked from the fine particle suction port 13.

Further, the controller 51 controls the cleaning gas introduction device 21 and the intake device 11. Processing performed by the controller 51 will be described later.

Note that the data processor 41 and the controller 51 may be one integrated device.

A concentration of the separated fine particles P in the air is extremely low. It is thus difficult to analyze the fine particles P by the gas analyzer 31 in this state. Therefore, the cyclone dust collector 14 is provided between the gas analyzer 31 and the fine particle suction port 13. Concentrating by the cyclone dust collector 14 can increase the concentration of the separated fine particles P, and the fine particles P can be analyzed by the gas analyzer 31.

The cyclone dust collector 14 separates and concentrates the fine particles P sucked together with an airflow. A mass spectrometer or an ion mobility analyzer as a typical gas analyzer 31 can generally suck at a sample flow rate of only 1 L/min or less. For example, it is assumed that a gas is jetted from the air nozzle (not shown) at the fine particle suction port 13 at a flow rate of 40 L/min, and the fine particles P are separated from the object to be inspected. When the gas analyzer 31 sucks only 1 L/min of the airflow of 40 L/min, an inspection sensitivity will be 1/40.

Thus, as in this embodiment, the cyclone dust collector 14 is provided between the fine particle suction port 13 and the gas analyzer 31, whereby the attached matter can be separated from the airflow and concentrated. The cyclone dust collector 14 can collect a sample having a certain particle diameter or more and a certain density or more in a lower part of the cyclone dust collector 14, utilizing centrifugal force. For example, under certain conditions, fine particles P having a particle size of 1 um or more rotate in the cyclone dust collector 14 and are separated on an outer peripheral side in the cyclone dust collector 14 by centrifugal force. A rotation radius of the rotational movement in the cyclone dust collector 14 gradually decreases downward of the cyclone dust collector 14. The attached matter having a particle diameter of less than 1 um is discharged from a suction pipe (suction pipe portion) 12 together with the airflow by the intake device 11. A minimum particle diameter (separation limit particle diameter) of the fine particles P separated from the airflow by the rotational movement changes depending on a configuration of the cyclone dust collector 14 and a suction flow rate of the intake device 11.

For example, explosive fine particles, which are dangerous substances, usually have a particle diameter of about 5 to 100 μm, and thus the fine particles P having this particle diameter may be collected. Not only explosive fine particles but also chemical substances, harmful substances, dangerous substances, flammable substances, biological agents, viruses, bacteria, genes, environmental substances, and the like may be a target of detection as long as the substances are attached to the object to be inspected.

The fine particles P collected in the lower part of the cyclone dust collector 14 settle down to the heater 15. The heater 15 is provided with the primary filter 16. The fine particles P that have settled down are collected by the primary filter 16 and vaporized by being heated by the heater 15. The vaporized fine particles P pass through the secondary filter 17 and are introduced into the gas analyzer 31. The secondary filter 17 is not always necessary, but plays a role of preventing the fine particles P that have passed through the primary filter 16 from being introduced into the gas analyzer 31.

The heater 15 heats the fine particles P at, for example, 200°C. A temperature of the heater 15 may be any temperature at which the collected fine particles P can be vaporized, and may be changed depending on the components of the fine particles P to be inspected. The primary filter 16 and the secondary filter 17 only need to have a filtration accuracy capable of capturing the fine particles P having a particle diameter of 1 um or more. For example, a stainless filter having a filtration accuracy of 1 to 50 um can be used as the primary filter 16 and the secondary filter 17. The diameter and the filtration accuracy of the primary filter 16 and the secondary filter 17 do not necessarily have to be the same. Further, a gas pipe (gas pipe portion) 18 connecting the heater 15 and the gas analyzer 31 is also heated. This attempts to prevent molecules vaporized by the heater 15 from being adsorbed by an inner wall of the gas pipe 18. The gas pipe 18 between the heater 15 and the gas analyzer 31 is not always necessary, and the heater 15 and the gas analyzer 31 may be directly connected. In this case, the secondary filter 17 is omitted.

For example, a linear ion trap mass spectrometer can be used as the gas analyzer 31. Further, as the gas analyzer 31, a quadrupole ion trap mass spectrometer, a quadrupole filter mass spectrometer, a triple quadrupole mass spectrometer, a time-of-flight mass spectrometer, or a magnetic field mass spectrometer may be applied. Alternatively, an ion mobility spectrometer or the like may be used as the gas analyzer 31. Further, a device in which an ion mobility spectrometer and a mass spectrometer are connected can be used as the gas analyzer 31. Further, a device using various light sources such as fluorescent light, infrared light, and ultraviolet light may be used as the gas analyzer 31. In addition, a semiconductor sensor may be used, or any device may be used as long as a gasified sample can be analyzed.

When a mass spectrometer is used as the gas analyzer 31, the data processor 41 analyzes a mass spectrum measured by the gas analyzer 31 (mass spectrometer). Then, the data processor 41 identifies the components of the fine particles P and specifies the concentration of the fine particles P from the analyzed mass spectrum. For example, assuming that the fine particle analyzer 10 is a dangerous substance detector, the data processor 41 stores a database relating to dangerous substances in advance. In this database, thresholds for identifying components of the dangerous substances and determining concentrations are set. When the concentration of a detected component exceeds the specified threshold, the data processor 41 determines the component as positive. Not only the mass spectrometer but also another gas analyzer 31 such as an ion mobility spectrometer analyzes the fine particles P by collating with the database.

The fine particle analyzer 10 can automatically perform in real time a series of analysis sequences in which the collected fine particles P are collected by the cyclone dust collector 14, heated and vaporized, and analyzed by the gas analyzer 31. Here, a large number of fine particles P may be sucked at once, or a long-time operation may eventually cause a large number of fine particles P to be sucked. In such cases, the fine particles P may be deposited on the primary filter 16 or an inner wall of the cyclone dust collector 14.

For example, as described above, when the fine particles P are deposited on the primary filter 16, even if new fine particles P fall onto the deposited fine particles P, heat is not transmitted and the fine particles P do not evaporate, or any vaporized gas is absorbed by the deposited fine particles P. Then, the vaporized gas of the fine particles P is not introduced into the gas analyzer 31, which leads to a decrease in the sensitivity of the fine particle analyzer 10.

In this embodiment, a cleaning gas introduction device 21, which is a characterizing part of this embodiment, is provided in order to remove the fine particles P deposited on the primary filter 16. The cleaning gas introduction device 21 introduces the cleaning gas for cleaning the primary filter 16 into the gas pipe 18. Here, the cleaning gas may be air, and may include a substance for cleaning the primary filter 16.

The cleaning gas introduction device 21 may be provided between the gas analyzer 31 and the primary filter 16 regardless of the position of the secondary filter 17.

For example, a case is considered where the intake device 11 sucks gas at 100 L/min, the gas analyzer 31 takes in gas at 1 L/min, and the cleaning gas is supplied from the cleaning gas introduction device 21 at 0 L/min. At this time, the fine particle suction port 13 takes in gas at a total of 101 L/min. The gas for 100 L/min thereof is spirally rotated inside the cyclone dust collector 14 and then exhausted from the suction pipe 12. When a cyclone phenomenon is occurring, an upward airflow is generated in a central portion inside the cyclone dust collector 14 (arrow A12 in FIG. 1). However, in the fine particle analyzer 10, gas is sucked at 1 L/min into the gas analyzer 31, and thus a downward airflow is generated near the primary filter 16 as shown in FIG. 1 (arrow A11 in FIG. 1). Therefore, the gas vaporized from the fine particles P collected by the primary filter 16 flows downward and is introduced into the gas analyzer 31.

In this situation, it is assumed that the cleaning gas introduction device 21 introduces the cleaning gas into the gas pipe 18 at, for example, 1 L/min. In this case, an introduction flow rate of the cleaning gas matches the suction flow rate of the gas analyzer 31. Then, the cleaning gas introduced from the cleaning gas introduction device 21 is sucked into the gas analyzer 31, and thus a suction force to the gas analyzer 31 near the primary filter 16 is weakened. As a result, as shown in FIG. 2, no downward airflow occurs near the primary filter 16. There is rather an influence of the upward airflow generated by the cyclone phenomenon because the downward airflow is not generated near the primary filter 16. In other words, the cleaning gas is introduced from the cleaning gas introduction device 21 to the gas pipe 18, as shown in FIG.

2, whereby the influence of the upward airflow due to the cyclone phenomenon becomes stronger near the primary filter 16 (arrow A13 in FIG. 2).

In this way, when the upward airflow is generated near the primary filter 16, the fine particles P deposited on the primary filter 16 are separated from the primary filter 16 by the upward airflow and ascended. The fine particles P that has been separated and ascended are discharged to the outside of the cyclone dust collector 14 (outside of the fine particle analyzer 10) through the suction pipe 12 by the upward airflow in the cyclone dust collector 14. This is a cleaning mechanism of the primary filter 16, which is a feature of this embodiment.

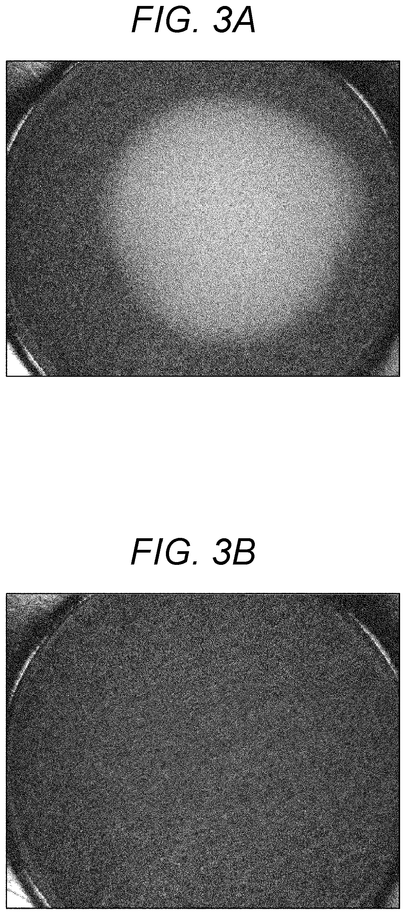

FIG. 3A is a photograph of the primary filter 16 before cleaning by a method of this embodiment, and FIG. 3B is a photograph of the primary filter 16 after cleaning by the method of this embodiment.

A white portion at a center in FIG. 3A is a portion on which the fine particles P are deposited.

As shown in FIG. 3A, the fine particles P are deposited before cleaning, but in FIG. 3B, the white portion at the center in FIG. 3A is eliminated. That is, as shown in FIG. 3B, it can be seen that most of the fine particles P have disappeared from the filter after cleaning.

Descriptions of FIG. 2 will be made again.

Here, when the intake flow rate of the gas analyzer 31 is x and the cleaning gas introduction flow rate of the cleaning gas introduction device 21 is y, in a case where y > x, an upward airflow is generated in the primary filter 16 regardless of the cyclone phenomenon. That is, when y > x, of the cleaning gas introduced from the cleaning gas introduction device 21, the cleaning gas that has not been sucked into the gas analyzer 31 flows backward through the gas pipe 18 toward the primary filter 16. As a result, an upward airflow is generated near the primary filter 16, and a cleaning effect is improved.

However, even when y < x, there is a certain cleaning effect due to the influence of the upward airflow due to the cyclone phenomenon. That is, even when y < x, the suction force to the gas analyzer 31 near the primary filter 16 is weakened by the introduction of the cleaning gas from the cleaning gas introduction device 21. Thus, the cleaning effect can be obtained when the suction force to the gas analyzer 31 is smaller than the upward airflow due to the cyclone phenomenon.

It is also effective to increase an intake amount of the intake device 11. When the intake amount of the intake device 11 is increased, the upward airflow in the central portion of the cyclone dust collector 14 becomes strong. This makes the upward airflow near the primary filter 16 strong and enhances the cleaning effect.

This embodiment has two states of an analysis mode and a cleaning mode, and the flow rate of the cleaning gas introduction flow rate of the cleaning gas introduction device 21 is changed during analysis and during cleaning. Here, in the analysis mode, the flow rate of the cleaning gas introduction flow rate of the cleaning gas introduction device 21 does not need to be 0 L/min. In other words, in the analysis mode, as long as y < x and the suction force to the gas analyzer 31 is larger than the upward airflow due to the cyclone phenomenon, the gas analyzer 31 can analyze even when the cleaning gas is introduced from the cleaning gas introduction device 21. For example, the cleaning gas may be introduced from the cleaning gas introduction device 21 at about 0.1 L/min during analysis. By doing so, the vaporized gas of the fine particles P can be introduced into the gas analyzer 31 in the analysis mode even when the cleaning gas is introduced from the cleaning gas introduction device 21.

Further, an internal standard substance or a sensitizer are used as the cleaning gas.

In such a case, the cleaning gas introduction device 21 plays a role of cleaning the primary filter 16 and also a role of introducing an internal standard substance or a sensitizer that increases the sensitivity of the gas analyzer 31.

Note that the cleaning gas and the internal standard substance or the sensitizer may be separately stored in the cleaning gas introduction device 21, and the gas introduced into the gas pipe 18 may be separated by a valve or the like (not shown).

When the gas analyzer 31 is a mass spectrometer, accuracy of the mass-to-charge ratio, which is a horizontal axis of a mass spectrum obtained as data, is important. When a voltage output in the gas analyzer 31 (mass spectrometer) changes due to a rise in temperature or the like of the gas analyzer 31 (mass spectrometer), the measured mass-to-charge ratio deviates. In order to correct this deviation, the internal standard substance at a constant concentration into the gas analyzer 31 (mass spectrometer) may be always introduced.

Since the measured mass-to-charge ratio of the internal standard substance is known, the deviation can be corrected using this value as a reference value. In addition, the introduction of the internal standard substance is also important from a viewpoint of ensuring soundness of the gas analyzer 31.

Further, the fine particle analyzer 10 of this embodiment can be operated unattended. Therefore, a function of automatically determining whether the sensitivity of the gas analyzer 31 has been reduced is required. When a constant amount of internal standard substance is always introduced, the sensitivity state can be grasped based on the gas analysis result of the substance. When both positive ions and negative ions are measured, both internal standard substances for positive ions and negative ions may be introduced. For example, 10,6-Tribromoresorcinol, 5-Bromo, 2-Chlorophenol, or 4,4'-Dimethylbenzophenone may be introduced.

Further, for example, when explosive fine particles are to be inspected, an organic acid such as lactic acid is may be introduced as a sensitizer. In an ionization stage of the gas analyzer 31, lactic acid is first ionized, and lactate ions are added to the explosive fine particles. As a result, the explosive fine particle ions as the lactic acid adduct are measured by the gas analyzer 31, and the sensitivity can be improved.

As described above, a possible operation is that the internal standard substance or the sensitizer is introduced at about 0.1 L/min from the cleaning gas introduction device 21 during analysis, and the introduction flow rate is increased during the cleaning.

By using the internal standard substance or the sensitizer as the cleaning gas as described above, the primary filter 16 can be cleaned, and good sensitivity of the gas analyzer 31 can be maintained.

Note that a mixed gas of the internal standard substance and the sensitizer may be used as the cleaning gas.

It is also a feature of this embodiment that there is no need to change settings of the gas analyzer 31 between the analysis mode and the cleaning mode If parameters such as the suction flow rate of the gas analyzer 31 are changed between the analysis mode and the cleaning mode in the gas analyzer 31 that is sensitive to parameter settings such as a mass spectrometer, it will take time until a measurement result is stabilized. In this embodiment, the primary filter 16 can be cleaned by changing only the introduction flow rate of the cleaning gas introduction device 21 or by changing the suction flow rate of the intake device 11 in addition to the introduction flow rate of the cleaning gas introduction device 21. Further, there is no need to change the settings of the gas analyzer 31.

One method is to determine the timing of changing the analysis mode and the cleaning mode based on a pressure. When a pressure inside the cyclone dust collector 14 is P1, a pressure below the primary filter 16 is P2, a conductance of the primary filter 16 is C, and a flow rate passing through the primary filter 16 is Q, the flow rate Q is expressed by equation (1).

$$Q = C\ (P1\ -\ P2) \cdots (1)$$

When equation (1) is modified for the pressure P2 below the primary filter 16, the following equation (2) is obtained.

$$P2 = P1\ -\ (Q/C) \cdots (2)$$

Therefore, when dust is deposited on the primary filter 16 and the conductance C of the primary filter 16 decreases, the pressure P2 below the primary filter 16 (hereinafter, referred to as pressure P2) decreases. Thus, the pressure P2 may be measured, and the analysis mode may be changed to the cleaning mode when the pressure P2 drops to or below a certain value. As the pressure P2, a pressure of the gas pipe 18 connecting the heater 15 and the gas analyzer 31 may be measured, or a pressure inside the gas analyzer 31 may be measured. When the gas analyzer 31 is a mass spectrometer or an ion mobility analyzer, the pressure of an ion source 32 of the analyzer may be measured.

(Cleaning processing)

<Pressure determination>

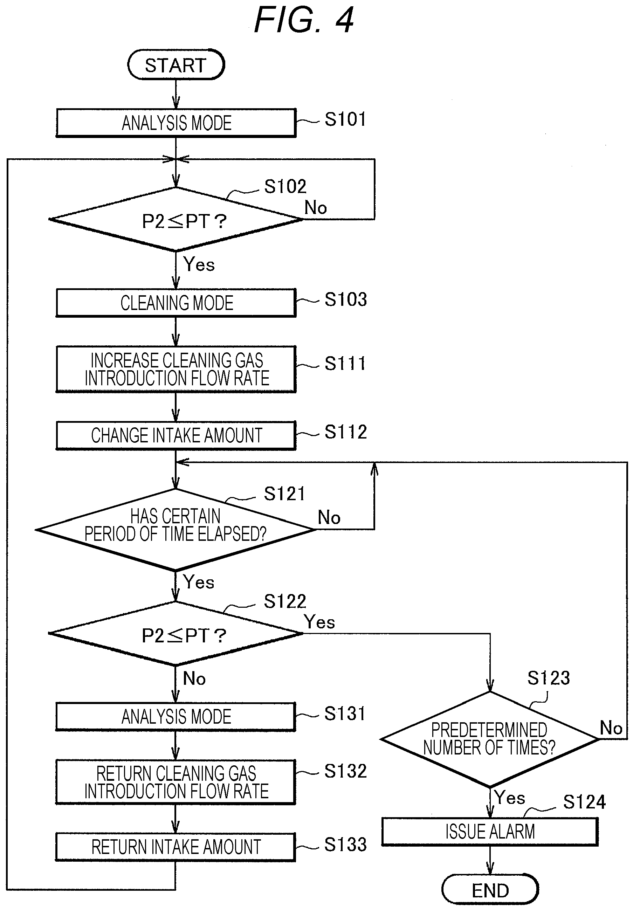

FIG. 4 is a flowchart showing a procedure of cleaning processing performed in the first embodiment (first method).

FIG. 4 shows a method of changing the mode by the pressure P2.

First, the mode of the fine particle analyzer 10 is the analysis mode (S101).

In this analysis mode, the pressure P2 is measured at regular intervals, and the controller 51 determines whether the pressure P2 is equal to or less than a predetermined threshold PT (P2 ≤ PT) (S102).

As a result of step S102, when the pressure P2 is larger than the predetermined threshold PT (S102 → No), the controller 51 returns the processing to step S102.

As a result of Step S102, when the pressure P2 is equal to or less than the predetermined threshold PT (S102 → Yes), the controller 51 sets the mode to the cleaning mode (S103).

Then, the controller 51 operates the cleaning gas introduction device 21 to increase the introduction flow rate (cleaning gas introduction flow rate) of the cleaning gas introduced from the cleaning gas introduction device 21 (S111). As described above, the cleaning gas may be an internal standard substance or a sensitizer.

Further, the controller 51 changes (increases) the intake amount of the intake device 11 (S112). However, the processing in step S112 is not essential. Note that the controller 51 may change the cleaning gas introduction flow rate and the intake amount of the intake device 11, or a user may manually change the flow rate and the intake amount. In step S112, the intake amount of the intake device 11 is changed (increased), whereby the upward airflow of the cyclone dust collector 14 can be increased. This can enhance the cleaning effect.

Next, the controller 51 determines whether a certain period of time has elapsed (S121).

As a result of step S121, when the certain period of time has not elapsed (S121 → No), the controller 51 returns the processing to step S121. That is, the cleaning mode is continued.

As a result of Step S121, when the certain period of time has elapsed (S121 → Yes), the controller 51 determines again whether the pressure P2 is equal to or less than the predetermined threshold PT (P2 ≤ PT) (S122).

As a result of step S122, when the pressure P2 is equal to or less than the predetermined threshold PT (S122 → Yes), the controller 51 determines whether the determination in step S122 has been performed a predetermined number of times consecutively (S123). The predetermined number of times is, for example, two or three times.

As a result of step S123, when the determination in step S122 has not been performed the predetermined number of times (S123 → No), the controller 51 returns the processing to step S122. That is, the cleaning mode is performed again for the predetermined period of time.

As a result of step S123, when the determination in step S122 has been performed the predetermined number of times consecutively (S123 → Yes), it is determined that cleaning by this method is impossible, and an alarm indicating that manual cleaning is required is issued (S124).

As a result of step S122, when the pressure P2 is larger than the predetermined threshold PT (S122 → No), the controller 51 returns the mode to the analysis mode (S131). That is, the controller 51 returns the cleaning gas introduction flow rate by the cleaning gas introduction device 21 to the value in the analysis mode (S132), and returns the intake amount of the intake device 11 to the value in the analysis mode (S133).

Then, controller 51 returns the processing to step S102.

The processing shown in FIG. 4 can achieve an appropriate cleaning.

<Time determination>

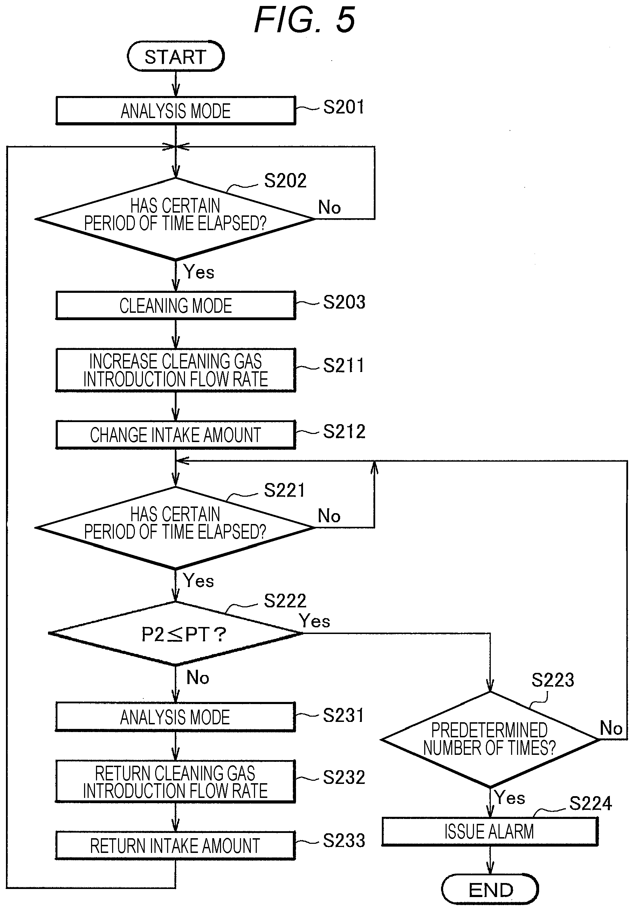

FIG. 5 is a flowchart showing a procedure of cleaning processing performed in the first embodiment (second method).

As in the processing shown in FIG. 4, a continuous operation may be changed from the analysis mode to the cleaning mode every time a certain period of time has elapsed without the determination based on the pressure P2. This method will be described with reference to FIG. 5.

First, the mode of the fine particle analyzer 10 is the analysis mode (S201).

In this analysis mode, the controller 51 measures time passed since the previous cleaning, and determines whether a certain period of time has elapsed since the previous cleaning (S202).

As the result of step S202, when the certain period of time has not elapsed (S202 → No), the controller 51 returns the processing to step S202.

As a result of Step S202, when the certain period of time has elapsed (S202 → Yes), the controller 51 sets the mode to the cleaning mode (S203).

Then, the controller 51 operates the cleaning gas introduction device 21 to increase the introduction flow rate (cleaning gas introduction flow rate) of the cleaning gas introduced from the cleaning gas introduction device 21 (S211).

Further, the controller 51 changes (increases) the intake amount of the intake device 11 (S212). However, the processing in step S212 is not essential.

Next, the controller 51 determines whether a certain period of time has elapsed (S221).

As the result of step S221, when the certain period of time has not elapsed (S221 → No), the controller 51 returns the processing to step S221. That is, the cleaning mode is continued.

As a result of Step S221, when the certain period of time has elapsed (S221 → Yes), the controller 51 determines whether the pressure P2 is equal to or less than the predetermined threshold PT (P2 ≤ PT) (S222).

As a result of step S222, when the pressure P2 is equal to or less than the predetermined threshold PT (S222 → Yes), the controller 51 determines whether the determination in step S222 has been performed a predetermined number of times consecutively (S223). The predetermined number of times is, for example, two or three times.

As a result of step S223, when the determination in step S222 has not been performed the predetermined number of times (S223 → No), controller 51 returns the processing to step S222. That is, the cleaning mode is performed again for the predetermined period of time.

As a result of step S223, when the determination in step S222 has been performed the predetermined number of times consecutively (S223 → Yes), it is determined that cleaning by this method is impossible, and an alarm indicating that manual cleaning is required is issued (S224).

As a result of Step S222, when the pressure P2 is larger than the predetermined threshold PT (S222 → No), the controller 51 returns the mode to the analysis mode (S231). That is, the controller 51 returns the cleaning gas introduction flow rate by the cleaning gas introduction device 21 to the value in the analysis mode (S232), and returns the intake amount of the intake device 11 to the value in the analysis mode (S233).

After that, the controller 51 returns the processing to step S202.

According to the processing shown in FIG. 5, the primary filter 16 is periodically cleaned, and thus the primary filter 16 can be always kept clean.

Here, the processing shown in FIG. 4 and the processing shown in FIG. 5 are compatible.

For example, in a case where the cleaning is set to be performed every 10 hours, even if the set time has not elapsed from the previous cleaning, the controller 51 may change to the cleaning mode when the pressure P2 is equal to or less than the threshold PT.

Further, in the processing shown in FIG. 5, the controller 51 may change to the cleaning mode at a fixed date and time instead of the time passed from the previous cleaning. For example, the controller 51 may change to the cleaning mode at seven am every day. This method is compatible with the processing in FIG. 4 in which the determination is based on the pressure P2. For example, the mode is set to change to the cleaning mode at 7 am every day. However, when the pressure falls to or below the threshold at 9 pm, the controller 51 changes to the cleaning mode. Then, even when the controller 51 returns to the analysis mode after the end of the cleaning, the controller 51 changes to the cleaning mode again at 7 am.

The user may forcibly change from the analysis mode to the cleaning mode regardless of the pressure or the time. Further, the mode may be changed from the analysis mode to the cleaning mode based on the analysis result of the gas analyzer 31. For example, when the fine particles P are deposited on the primary filter 16, the gas vaporized from the deposited fine particles P is continuously introduced into the gas analyzer 31, and a noise signal increases as compared with a case where no fine particles P are deposited. When an amount of the noise signal becomes equal to or larger than the threshold, the controller 51 may change to the cleaning mode. For example, when the gas analyzer 31 is a mass spectrometer, a large amount of data of the environment in which the gas analyzer 31 (mass spectrometer) is operated may be obtained. This makes it possible to grasp the ions obtained when the fine particles P peculiar to the environment are deposited on the primary filter 16. In such a case, the controller 51 may change to the cleaning mode based on an amount of a specific ion. Even when ions that can be used to predict a deposit of the fine particles P cannot be specified, a total ion amount that has been detected in the gas analyzer 31 (mass spectrometer) is related to an amount of the fine particles P deposited on the primary filter 16. Therefore, the change to the cleaning mode may be determined based on the total amount of ions that has been detected.

This embodiment allows the primary filter 16 to be cleaned without stopping and disassembling the fine particle analyzer 10.

Note that the cleaning gas introduction device 21 may have any configuration that can introduce the cleaning gas and adjust the introduction flow rate. For example, a combination of a compressor, a pressure regulator, and a flow rate controller may be used, or a blower may be used instead of the compressor. When a method of jetting gas to the object to be inspected to separate and collect the attached fine particles P is used, a compressor used for the gas jetting and a compressor connected to the cleaning gas introduction device 21 may be the same. This simplifies a configuration of the fine particle analyzer 10.

<Second Embodiment>

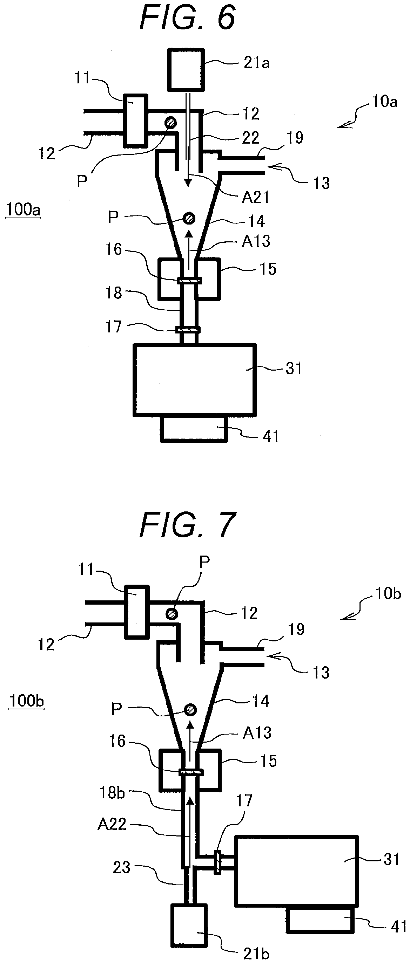

FIG. 6 is a diagram showing a configuration of a fine particle analysis system 100a according to a second embodiment, which is not an embodiment of the invention but an example useful for its understanding. Note that in FIGS. 6 to 10, similar configurations to in FIGS. 1 and 2 are denoted by the same reference signs, and descriptions thereof are omitted. Further, in FIGS. 6 to 10, the controller 51 is not shown. The procedures of the cleaning processing in FIGS. 6 to 10 use the methods shown in FIGS. 4 and 5.

A fine particle analyzer 10a of the fine particle analysis system 100a shown in FIG. 6 differs from the fine particle analyzer 10 shown in FIG. 1 in the following points. That is, the gas pipe 18 connecting the heater 15 and the gas analyzer 31 is not provided with a cleaning gas introduction device 21. The suction pipe 12 connected to the intake device 11 is provided with the cleaning gas introduction device 21a and a cleaning gas nozzle 22.

In the fine particle analyzer 10a, the cleaning gas is jetted into the cyclone dust collector 14 via the cleaning gas nozzle 22 (arrow A21 in FIG. 6). By doing so, not only the fine particles P deposited on the primary filter 16 but also the fine particles P deposited on the inner wall of the cyclone dust collector 14 can be blown off and exhausted.

Here, the cleaning gas is blown onto the primary filter 16 from the cleaning gas nozzle 22 disposed right above the primary filter 16. This allows the cleaning gas to be blown directly to the primary filter 16, thereby further enhancing the cleaning effect.

In the fine particle analyzer 10a, introducing the cleaning gas from the cleaning gas nozzle 22 in the analysis mode affects a collection efficiency of the cyclone dust collector 14. Therefore, the cleaning gas introduction flow rate in the analysis mode may be about 0 L/min. The cleaning gas introduction device 21a may be a combination of a compressor, a pressure regulator, and a high-speed valve. For example, time for the introduction of the cleaning gas is adjusted by a valve. For example, a jetting pressure of the cleaning gas is set to 0.3 MPa by a pressure regulator, and the cleaning gas may be jetted for about 1 second by the valve repeatedly about five times. By the jetted cleaning gas, the fine particles P deposited on the primary filter 16 and the inner wall of the cyclone dust collector 14 fly up, are sucked from the suction pipe 12, and are discharged to the outside of the fine particle analyzer 10a.

In the fine particle analyzer 10a, a tip of the cleaning gas nozzle 22 is desirably located inside the suction pipe 12 in order to prevent an influence on the cyclone phenomenon (swirling airflow). In order to enhance the cleaning effect while preventing the influence on the cyclone phenomenon, the tip of the gas nozzle 22 may be located at an end of the suction pipe 12 closer to the cyclone dust collector 14. Further, as shown in FIG. 6, the cleaning gas nozzle 22 may be located at a center of the suction pipe 12.

<Third Embodiment>

FIG. 7 is a diagram showing a configuration of a fine particle analysis system 100b according to a third embodiment, which is not an embodiment of the invention but an example useful for its understanding.

In a fine particle analyzer 10b of the fine particle analysis system 100b, a cleaning gas introduction device 21b and a gas introduction pipe 23 are disposed below the primary filter 16. Then, the cleaning gas is configured to be introduced from between the primary filter 16 and the secondary filter 17. The fine particle analyzer 10b is the same as the fine particle analyzer 10 shown in FIG. 1 in this respect, but differs from the fine particle analyzer 10 shown in FIG. 1 in that a gas pipe 18b has an L-shaped configuration. That is, the fine particle analyzer 10b is different from the fine particle analyzer 10 shown in FIG. 1 in that the gas analyzer 31 is disposed at a position in which the gas analyzer 31 cannot be seen from a jetting direction of the gas introduction pipe 23. Here, the gas analyzer 31 is connected to one end of the L-shaped gas pipes 18b, and the cyclone dust collector 14 is connected to another end. The gas introduction pipe 23 is connected to a bent portion of the L-shaped gas pipe 18b.

This is because the jetted cleaning gas does not flow toward the gas analyzer 31 but flows toward the primary filter 16.

In FIG. 7, the gas pipe 18b has a configuration of being bent at about 90°. However, the configuration is not limited to this angle as long as the jetted cleaning gas does not flow toward the gas analyzer 31.

In the fine particle analyzer 10a shown in FIG. 6, the cleaning gas is jetted from above the primary filter 16, and thus a force acts so as to press the fine particles P deposited on the primary filter 16 against the primary filter 16. On the other hand, in the fine particle analyzer 10b shown in FIG. 7, the cleaning gas is jetted in a direction in which the cleaning gas passes from below the primary filter 16 to above the primary filter 16 (arrow A22 in FIG. 7). Therefore, the fine particle analyzer 10b can enhance the cleaning effect of the primary filter 16 as compared with the fine particle analyzer 10a.

In the fine particle analyzer 10b, similarly to the fine particle analyzer 10a shown in FIG. 6, introducing the cleaning gas from the cleaning gas introduction device 21 in the analysis mode affects the collection efficiency of the cyclone dust collector 14 In addition, when the cleaning gas is introduced from the cleaning gas introduction device 21 in the analysis mode, the gas vaporized by the primary filter 16 is prevented from flowing into the gas analyzer 31. Thus, the cleaning gas introduction flow rate in the analysis mode may be about 0 L/min. The cleaning gas introduction device 21b may be a combination of a compressor, a pressure regulator, and a high-speed valve. For example, time for the introduction of the cleaning gas is adjusted by a valve. For example, a jetting pressure of the cleaning gas is set to 0.3 MPa by a pressure regulator, and the cleaning gas may be jetted for about 1 second by the valve repeatedly about five times. By the jetted cleaning gas, the fine particles P deposited on the primary filter 16 fly up, are sucked from the suction pipe 12, and are discharged to the outside of the analyzer.

<Fourth Embodiment>

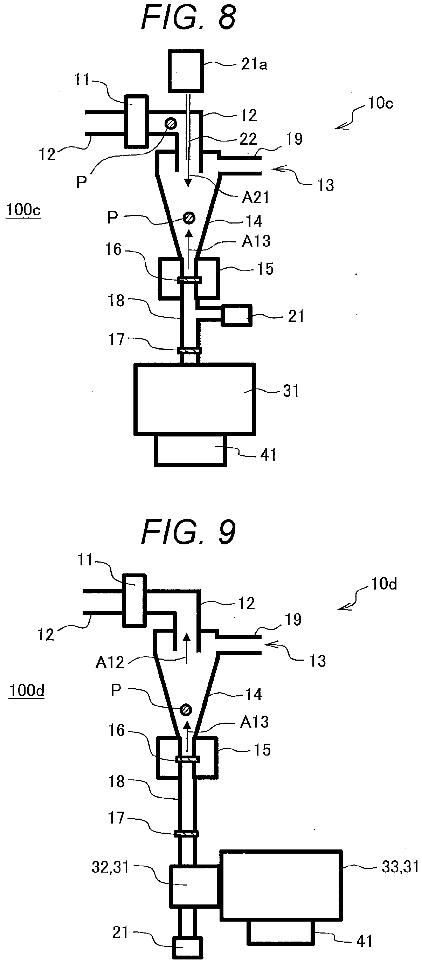

FIG. 8 is a diagram showing a configuration of a fine particle analysis system 100c according to a fourth embodiment, which is an embodiment of the invention.

A fine particle analyzer 10c of the fine particle analysis system 100c shown in FIG. 8 has a configuration in which the fine particle analyzer 10 shown in FIG. 1 and the fine particle analyzer 10a shown in FIG. 6 are combined. That is, in the fine particle analyzer 10c, the cleaning gas introduction devices 21 and 21a are disposed in the suction pipe 12 and the gas pipe 18. The cleaning gas introduction device 21 connected to the gas pipe 18 operates to generate an upward airflow in the primary filter 16. Further, in this state, the cleaning gas is jetted from above the primary filter 16 by the cleaning gas introduction device 21a having the cleaning gas nozzle 22. Thus, the fine particles P deposited on the primary filter 16 can be discharged more efficiently than in the fine particle analyzer 10 and the fine particle analyzer 10a.

<Fifth Embodiment>

FIG. 9 is a diagram showing a configuration of a fine particle analysis system 100d according to a fifth embodiment, which is not an embodiment of the invention but an example useful for its understanding.

In a fine particle analyzer 10d of the fine particle analysis system 100d shown in FIG. 9, the gas analyzer 31 is shown as being disassembled into an ion source 32 and an ion separation unit 33. In the fine particle analyzer 10d, unlike the fine particle analyzer 10 shown in FIG. 1, the cleaning gas introduction device 21 is connected to the ion source 32. The cleaning effect of the fine particle analyzer 10d is similar to the cleaning effect of the fine particle analyzer 10 shown in FIG. 1. The downward flow of the primary filter 16 becomes weak when the cleaning gas is introduced from the cleaning gas introduction device 21. As a result, the fine particles P deposited under the influence of the upward airflow generated in the cyclone dust collector 14 are discharged out of the fine particle analyzer 10. In this case, a pressure in the ion source 32 may be used as the pressure P2 in FIG. 4.

This achieves an appropriate cleaning.

<Sixth Embodiment>

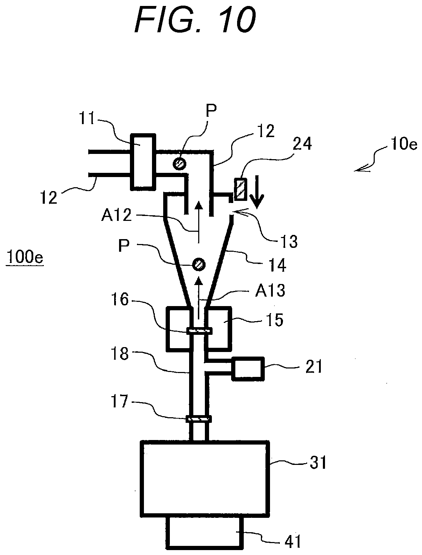

FIG. 10 is a diagram showing a configuration of a fine particle analysis system 100e according to a sixth embodiment, which is not an embodiment of the invention but an example useful for its understanding.

In a fine particle analyzer 10e of the fine particle analysis system 100e shown in FIG. 10, the fine particle suction port 13 is provided with a lid 24, and the cleaning gas introduction device 21 is disposed below the primary filter 16. A position where the cleaning gas introduction device 21 is provided is the same as a position of the fine particle analyzer 10 shown in FIG. 1.

In the fine particle analyzer 10e, the lid 24 is open in the analysis mode, whereby the fine particles P are sucked into the cyclone dust collector 14. Then, the lid 24 is closed (thick arrow in FIG. 10) in the cleaning mode. When the lid 24 is open, gas (air) from the object to be inspected is introduced into the cyclone dust collector 14 from the fine particle suction port 13. On the other hand, when the lid 24 is closed, the inflow from the fine particle suction port 13 stops, and thus only the suction by the intake device 11 is performed. That is, due to the intake by the intake device 11, the inside of the cyclone dust collector 14 has a negative pressure with respect to the outside of the cyclone dust collector 14. As a result, the cleaning gas from the cleaning gas introduction device 21 is sucked into the cyclone dust collector 14 only by opening the cleaning gas introduction device 21 to the gas pipe 18 without a special injection device. Therefore, the cleaning gas from the cleaning gas introduction device 21 flows through the primary filter 16 to the intake device 11 without a special injection device.

As described above, when the lid 24 is closed, the inside of the cyclone dust collector 14 has a negative pressure with respect to the outside of the cyclone dust collector 14, and thus the fine particles P deposited on the primary filter 16 fly up. Then, the flying fine particles P are discharged from the suction pipe 12 to the outside of the fine particle analyzer 10.

At this time, when the suction flow rate of the intake device 11 and the introduction flow rate of the cleaning gas introduction device 21 are not balanced, that is, when the suction flow rate of the intake device 11 is larger than the introduction flow rate of the cleaning gas introduction device 21, the gas analyzer 31 side ( inside of the gas pipe 18) has a negative pressure. In order to solve this, the cleaning gas introduction device 21 may be connected to the atmosphere through a valve in the fine particle analyzer 10e. When this valve is open, the cleaning gas introduction device 21 is connected to the atmosphere. As described above, when the lid 24 is closed, the inside of the cyclone dust collector 14 has a negative pressure with respect to the outside of the cyclone dust collector 14. Then, the lid 24 is closed while the cleaning gas introduction device 21 is connected to the atmosphere, and the cleaning gas introduction device 21 is released to the gas pipe 18. Then, due to the negative pressure in the cyclone dust collector 14, the cleaning gas flows in a direction of the cleaning gas introduction device 21, the primary filter 16, and the intake device 11 without a special injection device. This can simplify a configuration of the cleaning gas introduction device 21. In addition, the suction flow rate of the intake device 11 is equal to the introduction flow rate of the cleaning gas introduction device 21. This can prevent the gas analyzer 31 side (in the gas pipe 18) from having a negative pressure.

Further, the lid 24 is closed, and thus the inside of the cyclone dust collector 14 has a significantly more negative pressure than the outside of the cyclone dust collector 14. This enhances an increasing pressure of the cleaning gas, thereby improving a degree of cleaning.

The present invention is not limited to the above-described embodiments, but includes various modifications. For example, the above embodiments have been described in detail to make the description of the present invention easy to understand, and the present invention is not necessarily limited to having all the above-described configurations. Further, a part of the configuration of one embodiment can be replaced with a configuration of another embodiment, and the configuration of one embodiment can be added to a configuration of another embodiment. Further, it is possible to add, delete, and replace another configuration for a part of the configuration of each embodiment.

Further, each of the above-described configurations, functions, and the like may be achieved by hardware by designing a part or all of them, for example, by an integrated circuit. The above-described configurations, functions, and the like may be achieved by software in such a manner that a processor such as a CPU interprets and executes a program for achieving each function. Information such as programs, tables, and files that achieves each function can be stored in a hard disk (HD), as well as in a memory, a recording device such as a solid state drive (SSD), or a recording device such as an integrated circuit (IC) card, a secure digital (SD) card, or a digital versatile disc (DVD).

Further, in each embodiment, control lines and information lines that are considered to be necessary for explanation are shown, and not all control lines and information lines in a product are necessarily shown. In practice, it may be considered that almost all configurations are interconnected.

Reference Signs List

    10, 10a to 10e fine particle analyzer
    11 intake device (intake unit)
    12 suction pipe (suction pipe portion)
    13 fine particle suction port (fine particle suction portion)
    14 cyclone dust collector (cyclone dust collection unit)
    16 primary filter (filter portion)
    18 gas pipe (gas pipe portion)
    21, 21a, 21b cleaning gas introduction device (cleaning gas introduction unit)
    22 cleaning gas nozzle (gas nozzle portion)
    24 lid (lid portion)
    31 gas analyzer (gas analysis unit)
    32 ion source
    33 ion separation unit
    41 data processor
    51 controller
    100, 100a to 100e fine particle analysis system
    P fine particles

**Claims**

1. A fine particle analyzer comprising:

    [a] a cyclone dust collection unit (14);
    [b] a filter portion (16) connected downstream of the cyclone dust collection unit and configured to be heated;
    [c] a gas analysis unit (31) connected to the filter portion and adapted to analyze fine particles in an analysis mode; and
    [d] a gas pipe portion (18) connecting the cyclone dust collection unit with the gas analysis unit and provided with the filter portion;

    **characterized by**:

    [e] a cleaning gas introduction unit (21) provided to the gas pipe portion and configured to introduce an internal standard substance or a sensitizer as a cleaning gas into a space in the gas pipe portion downstream of the filter portion or into the cyclone dust collection unit; and
    a gas nozzle portion (22) for jetting the cleaning gas from above the filter portion into the cyclone dust collection unit, the gas nozzle portion being connected to the cleaning gas introduction unit, being disposed inside a suction pipe portion (12) connected to the cyclone dust collection unit, and being disposed at an exhaust side of the cyclone dust collection unit;
    wherein at least the filter portion is cleaned in a cleaning mode, and
    wherein the cleaning gas introduced from the cleaning gas introduction unit has a flow rate which is increased in the cleaning mode, so that the flow rate in the cleaning mode is larger than in the analysis mode.

2. The fine particle analyzer according to claim 1, wherein the analysis mode is changed to the cleaning mode when a pressure downstream of the filter portion (18) is equal to or less than a predetermined value.

3. The fine particle analyzer according to claim 1, wherein the analysis mode is changed to the cleaning mode when a predetermined period of time elapses from a previous cleaning.

4. The fine particle analyzer according to claim 1, comprising

    an intake unit (11) configured to suck an air inside the cyclone dust collection unit (14), wherein the intake unit is adapted to intake the air at a suction flow rate which is increased in the cleaning mode rather than in the analysis mode.

5. The fine particle analyzer according to claim 1, wherein

    the gas pipe portion (18) is bent, and the cleaning gas introduction unit (21) is provided to the gas pipe portion (18) such that the cleaning gas introduced from the cleaning gas introduction unit does not flow into the gas analysis unit (31).

6. The fine particle analyzer according to claim 1, comprising

    a fine particle suction portion (13) configured to suck fine particles which are to be introduced into the cyclone dust collection unit (14), wherein the fine particle suction portion is provided with a lid (24), and wherein the lid is open in the analysis mode and closed in the cleaning mode.

7. The fine particle analyzer according to claim 1, wherein the gas analysis unit (31) functions as an ion analysis unit,

    wherein the ion analysis unit comprises an ion source,
    wherein the analysis mode is changed to the cleaning mode when a pressure value of the ion source is equal to or less than a threshold.

8. A fine particle analysis system comprising:

    [a] the fine particle analyzer (10) according to claim 1; and
    [b] a controller (51) configured to control the fine particle analyzer;

    wherein the controller is adapted to increase the flow rate of the cleaning gas introduced from the cleaning gas introduction unit in the cleaning mode, so that the flow rate in the cleaning mode is larger than in the analysis mode.

9. A cleaning method comprising:

    providing a fine particle analysis system comprising:

        [a] a fine particle analyzer (10) comprising:

            [i] a cyclone dust collection unit (14);
            [ii] a filter portion (16) connected downstream of the cyclone dust collection unit and configured to be heated;
            [iii] a gas analysis unit (31) connected to the filter portion and adapted to analyze fine particles in an analysis mode;

[iv] a gas pipe portion (18) connecting the cyclone dust collection unit with the gas analysis unit and provided with the filter portion;

[v] a cleaning gas introduction unit (21) provided to the gas pipe portion and configured to introduce an internal standard substance or a sensitizer as a cleaning gas into a space in the gas pipe portion downstream of the filter portion or the cyclone dust collection unit, and

[vi] a gas nozzle portion (22) for jetting the cleaning gas from above the filter portion into the cyclone dust collection unit, the gas nozzle portion being connected to the cleaning gas introduction unit, being disposed inside a suction pipe portion (12) connected to the cyclone dust collection unit, and being disposed at an exhaust side of the cyclone dust collection unit,

[b] a controller (51) configured to control the fine particle analyzer, the cleaning method further comprising:

changing (S103; S203) by the controller from an analysis mode to a cleaning mode, wherein the cleaning mode includes cleaning at least the filter portion, and

increasing (S111; S211) by the controller a flow rate of the cleaning gas, which is introduced from the cleaning gas introduction unit, in the cleaning mode, so that the flow rate in the cleaning mode is larger than in the analysis mode.

10. The cleaning method according to claim 9, wherein the controller (51) changes (S103) the analysis mode to the cleaning mode when a pressure downstream of the filter portion (18) is equal to or less than a predetermined value (S102).

11. The cleaning method according to claim 9, wherein the controller (51) changes (S203) the analysis mode to the cleaning mode when a predetermined period of time elapses from a previous cleaning (S202).

**Patentansprüche**

1. Feinteilchenanalysevorrichtung, umfassend:

[a] eine Wirbelstaubsammeleinheit (14);

[b] einen Filterabschnitt (16), der stromabwärts der Wirbelstaubsammeleinheit verbunden ist und dazu eingerichtet ist, beheizt zu werden;

[c] eine Gasanalyseeinheit (31), die mit dem Filterabschnitt verbunden ist und dazu ausgelegt ist, feine Teilchen in einem Analysemodus zu analysieren; und

[d] einen Gasleitungsabschnitt (18), der die Wirbelstaubsammeleinheit mit der Gasanalyseeinheit verbindet und mit dem Filterabschnitt versehen ist;

**gekennzeichnet durch**:

[e] eine Reinigungsgas-Einführungseinheit (21), die am Gasleitungsabschnitt vorgesehen ist und dazu eingerichtet ist, eine interne Standardsubstanz oder einen Sensibilisator als ein Reinigungsgas in einen Raum im Gasleitungsabschnitt stromabwärts des Filterabschnitts oder in die Wirbelstaubsammeleinheit einzuführen; und

einen Gasdüsenabschnitt (22) zum Ausstoßen des Reinigungsgases oberhalb des Filterabschnitts in die Wirbelstaubsammeleinheit, wobei der Gasdüsenabschnitt mit der Reinigungsgas-Einführungseinheit verbunden ist, innerhalb eines Saugrohrabschnitts (12) angeordnet ist, der mit der Wirbelstaubsammeleinheit verbunden ist, und an einer Auslassseite der Wirbelstaubsammeleinheit angeordnet ist;

wobei zumindest der Filterabschnitt in einem Reinigungsmodus gereinigt wird, und

wobei das von der Reinigungsgas-Einführungseinheit eingeführte Reinigungsgas eine Strömungsrate aufweist, die im Reinigungsmodus erhöht ist, so dass die Strömungsrate im Reinigungsmodus größer ist als im Analysemodus.

2. Feinteilchenanalysevorrichtung nach Anspruch 1, wobei der Analysemodus auf den Reinigungsmodus geändert wird, wenn ein Druck stromabwärts des Filterabschnitts (18) kleiner oder gleich einem vorgegebenen Wert ist.

3. Feinteilchenanalysevorrichtung nach Anspruch 1, wobei der Analysemodus in den Reinigungsmodus geändert wird, wenn eine vorbestimmte Zeitspanne seit einer vorherigen Reinigung verstrichen ist.

4. Feinteilchenanalysevorrichtung nach Anspruch 1, umfassend

eine Aufnahmeeinheit (11), die dazu eingerichtet ist, Luft innerhalb der Wirbelstaubsammeleinheit (14) zu saugen,

wobei die Aufnahmeeinheit dazu ausgelegt ist, die Luft mit einer Saugströmungsrate aufzunehmen, die im Reinigungsmodus erhöht in Bezug auf den Analysemodus ist.

**5.** Feinteilchenanalysevorrichtung nach Anspruch 1, wobei

der Gasleitungsabschnitt (18) gebogen ist, und die Reinigungsgas-Einführungseinheit (21) am Gasleitungsabschnitt (18) so vorgesehen ist, dass das von der Reinigungsgas-Einführungseinheit eingeführte Reinigungsgas nicht in die Gasanalyseeinheit (31) strömt.

**6.** Feinteilchenanalysevorrichtung nach Anspruch 1, umfassend

einen Feinteilchensaugabschnitt (13), der dazu eingerichtet ist, feine Teilchen anzusaugen, die in die Wirbelstaubsammeleinheit (14) eingeführt werden sollen,
wobei der Feinteilchensaugabschnitt mit einem Deckel (24) versehen ist und
wobei der Deckel im Analysemodus geöffnet und im Reinigungsmodus geschlossen ist.

**7.** Feinteilchenanalysevorrichtung nach Anspruch 1, wobei die Gasanalyseeinheit (31) als lonenanalyseeinheit fungiert,

wobei die lonenanalyseeinheit eine lonenquelle umfasst,
wobei der Analysemodus auf den Reinigungsmodus geändert wird, wenn ein Druckwert der lonenquelle kleiner oder gleich einem Schwellenwert ist.

**8.** Feinteilchenanalysesystem, umfassend:

[a] die Feinteilchenanalysevorrichtung (10) nach Anspruch 1; und
[b] eine Steuereinrichtung (51), die dazu eingerichtet ist, die Feinteilchenanalysevorrichtung zu steuern;

wobei die Steuerungseinrichtung dazu ausgelegt ist, die Strömungsrate des von der Reinigungsgas-Einführungseinheit eingeführten Reinigungsgases im Reinigungsmodus zu erhöhen, so dass die Strömungsrate im Reinigungsmodus größer ist als im Analysemodus.

**9.** Reinigungsverfahren, umfassend:

Bereitstellen eines Feinteilchenanalysesystems, umfassend:

[a] eine Feinteilchenanalysevorrichtung (10), umfassend:

[i] eine Wirbelstaubsammeleinheit (14);
[ii] einen Filterabschnitt (16), der stromabwärts der Wirbelstaubsammeleinheit verbunden ist und dazu eingerichtet ist, beheizt zu werden;
[iii] eine Gasanalyseeinheit (31), die mit dem Filterabschnitt verbunden ist und dazu ausgelegt ist, feine Teilchen in einem Analysemodus zu analysieren;
[iv] einen Gasleitungsabschnitt (18), der die Wirbelstaubsammeleinheit mit der Gasanalyseeinheit verbindet und mit dem Filterabschnitt versehen ist;
(v) eine Reinigungsgas-Einführungseinheit (21), die am Gasleitungsabschnitt vorgesehen ist und dazu eingerichtet ist, eine interne Standardsubstanz oder einen Sensibilisator als ein Reinigungsgas in einen Raum im Gasleitungsabschnitt stromabwärts des Filterabschnitts oder in die Wirbelstaubsammeleinheit einzuführen, und
[vi] einen Gasdüsenabschnitt (22) zum Ausstoßen des Reinigungsgases oberhalb des Filterabschnitts in die Wirbelstaubsammeleinheit, wobei der Gasdüsenabschnitt mit der Reinigungsgas-Einführungseinheit verbunden ist, innerhalb eines Saugrohrabschnitts (12) angeordnet ist, der mit der Wirbelstaubsammeleinheit verbunden ist, und an einer Auslassseite der Wirbelstaubsammeleinheit angeordnet ist,

[b] eine Steuereinrichtung (51), die dazu eingerichtet ist, die Feinteilchenanalysevorrichtung zu steuern,

wobei das Reinigungsverfahren ferner umfasst:

Ändern (S103; S203) eines Analysemodus auf einen Reinigungsmodus durch die Steuerungseinrichtung, wobei der Reinigungsmodus das Reinigen zumindest des Filterabschnitts enthält, und
Erhöhen (S111; S211) einer Strömungsrate des Reinigungsgases, das von der Reinigungsgas-Einführungseinheit eingeführt wird, im Reinigungsmodus durch die Steuerungseinrichtung, so dass die Strömungsrate im Reinigungsmodus größer ist als im Analysemodus.

**10.** Reinigungsverfahren nach Anspruch 9, wobei die Steuerungseinrichtung (51) den Analysemodus auf den Reinigungsmodus ändert (S103), wenn ein Druck stromabwärts des Filterabschnitts (18) kleiner oder gleich einem vorbestimmten Wert ist (S102).

**11.** Reinigungsverfahren nach Anspruch 9, wobei die Steuerungseinrichtung (51) den Analysemodus auf den Reinigungsmodus ändert (S203), wenn eine vorbestimmte Zeitspanne seit einer vorherigen Reinigung verstrichen ist (S202).

## Revendications

1. Analyseur de particules fines comprenant :

   [a] une unité cyclone (14) de recueil de poussières ;
   [b] une partie (16) de filtre connectée en aval de l'unité cyclone de recueil de poussières et configurée pour être chauffée ;
   [c] une unité (31) d'analyse de gaz connectée à la partie de filtre et adaptée à analyser des particules fines dans un mode d'analyse ; et
   [d] une partie (18) de tuyau de gaz connectant l'unité cyclone de recueil de poussières avec l'unité d'analyse de gaz et prévue avec la partie de filtre ;

   **caractérisé par** :

   [e] une unité (21) d'introduction de gaz de nettoyage prévue au niveau de la partie de tuyau de gaz et configurée pour introduire une substance standard interne ou un sensibilisateur comme un gaz de nettoyage dans un espace dans la partie de tuyau de gaz en aval de la partie de filtre ou dans l'unité cyclone de recueil de poussières ; et
   une partie (22) de buse à gaz pour projeter le gaz de nettoyage par le dessus de la partie de filtre dans l'unité cyclone de recueil de poussières, la partie de buse à gaz étant connectée à l'unité d'introduction de gaz de nettoyage, étant disposée à l'intérieur d'une partie (12) de tuyau d'aspiration connectée à l'unité cyclone de recueil de poussières, et étant disposée au niveau d'un côté d'échappement de l'unité cyclone de recueil de poussières ;
   dans lequel au moins la partie de filtre est nettoyée dans un mode de nettoyage, et
   dans lequel le gaz de nettoyage introduit depuis l'unité d'introduction de gaz de nettoyage a un débit qui est augmenté dans le mode de nettoyage, de telle sorte que le débit dans le mode de nettoyage est plus grand que dans le mode d'analyse.

2. Analyseur de particules fines selon la revendication 1, dans lequel le mode d'analyse est changé pour le mode de nettoyage lorsqu'une pression en aval de la partie (18) de filtre est égale ou inférieure à une valeur prédéterminée.

3. Analyseur de particules fines selon la revendication 1, dans lequel le mode d'analyse est changé pour le mode de nettoyage lorsqu'une période de temps prédéterminée s'est écoulée depuis un nettoyage précédent.

4. Analyseur de particules fines selon la revendication 1, comprenant

   une unité (11) d'admission configurée pour aspirer un air à l'intérieur de l'unité cyclone (14) de recueil de poussières,
   dans lequel l'unité d'admission est adaptée à admettre l'air à un débit d'aspiration qui est augmenté dans le mode de nettoyage plutôt que dans le mode d'analyse.

5. Analyseur de particules fines selon la revendication 1, dans lequel

   la partie (18) de tuyau de gaz est courbe, et l'unité (21) d'introduction de gaz de nettoyage est prévue au niveau de la partie (18) de tuyau de gaz de telle manière que le gaz de nettoyage introduit depuis l'unité d'introduction de gaz de nettoyage ne s'écoule pas dans l'unité (31) d'analyse de gaz.

6. Analyseur de particules fines selon la revendication 1, comprenant

   une partie (13) d'aspiration de particules fines configurée pour aspirer des particules fines qui doivent être introduites dans l'unité cyclone (14) de recueil de poussières,
   dans lequel la partie d'aspiration de particules fines est prévue avec un couvercle (24), et
   dans lequel le couvercle est ouvert dans le mode d'analyse et fermé dans le mode de nettoyage.

7. Analyseur de particules fines selon la revendication 1, dans lequel l'unité (31) d'analyse de gaz fonctionne comme une unité d'analyse d'ions,

   dans lequel l'unité d'analyse d'ions comprend une source d'ions,
   dans lequel le mode d'analyse est changé pour le mode de nettoyage lorsqu'une valeur de pression de la source d'ions est égale ou inférieure à un seuil.

8. Système d'analyse de particules fines comprenant :

   [a] l'analyseur (10) de particules fines selon la revendication 1 ; et
   [b] un contrôleur (51) configuré pour commander l'analyseur de particules fines ;

dans lequel le contrôleur est adapté à augmenter le débit du gaz de nettoyage introduit depuis l'unité d'introduction de gaz de nettoyage dans le mode de nettoyage, de telle sorte que le débit dans le mode de nettoyage est plus grand que dans le mode d'analyse.

9. Procédé de nettoyage comprenant :

la prévision d'un système d'analyse de particules fines comprenant :

[a] un analyseur (10) de particules fines comprenant :

[i] une unité cyclone (14) de recueil de poussières ;
[ii] une partie (16) de filtre connectée en aval de l'unité cyclone de recueil de poussières et configurée pour être chauffée ;
[iii] une unité (31) d'analyse de gaz connectée à la partie de filtre et adaptée à analyser des particules fines dans un mode d'analyse ;
[iv] une partie (18) de tuyau de gaz connectant l'unité cyclone de recueil de poussières avec l'unité d'analyse de gaz et prévue avec la partie de filtre ;
[v] une unité (21) d'introduction de gaz de nettoyage prévue au niveau de la partie de tuyau de gaz et configurée pour introduire une substance standard interne ou un sensibilisateur comme un gaz de nettoyage dans un espace dans la partie de tuyau de gaz en aval de la partie de filtre ou dans l'unité cyclone de recueil de poussières, et
[vi] une partie (22) de buse à gaz pour projeter le gaz de nettoyage par le dessus de la partie de filtre dans l'unité cyclone de recueil de poussières, la partie de buse à gaz étant connectée à l'unité d'introduction de gaz de nettoyage, étant disposée à l'intérieur d'une partie (12) de tuyau d'aspiration connectée à l'unité cyclone de recueil de poussières, et étant disposée au niveau d'un côté d'échappement de l'unité cyclone de recueil de poussières,

[b] un contrôleur (51) configuré pour commander l'analyseur de particules fines, le procédé de nettoyage comprenant en outre :

le changement (S103 ; S203) par le contrôleur d'un mode d'analyse à un mode de nettoyage, dans lequel le mode de nettoyage inclut le nettoyage au moins de la partie de filtre, et l'augmentation (S111 ; S211) par le contrôleur d'un débit du gaz de nettoyage, qui est introduit depuis l'unité d'introduction de gaz de nettoyage, dans le mode de nettoyage, de telle sorte que le débit dans le mode de nettoyage est plus grand que dans le mode d'analyse.

10. Procédé de nettoyage selon la revendication 9, dans lequel le contrôleur (51) change (S103) le mode d'analyse pour le mode de nettoyage lorsqu'une pression en aval de la partie (18) de filtre est égale ou inférieure à une valeur prédéterminée (S102).

11. Procédé de nettoyage selon la revendication 9, dans lequel le contrôleur (51) change (S203) le mode d'analyse pour le mode de nettoyage lorsqu'une période de temps prédéterminée s'est écoulée depuis un nettoyage précédent (S202).

# FIG. 1

# FIG. 2

## FIG. 3A

## FIG. 3B

# FIG. 4

```
         ( START )
             │
             ▼
   ┌───────────────────┐
   │   ANALYSIS MODE   │──── S101
   └───────────────────┘
             │
             ▼
        ╱─────────╲        S102
       ╱           ╲         No
      ⟨   P2≤PT ?   ⟩───────────┐
       ╲           ╱           │
        ╲─────────╱            │
             │ Yes             │
             ▼                 │
   ┌───────────────────┐       │
   │   CLEANING MODE   │── S103 │
   └───────────────────┘       │
             │                 │
             ▼                 │
   ┌───────────────────────┐   │
   │ INCREASE CLEANING GAS │── S111
   │ INTRODUCTION FLOW RATE│   │
   └───────────────────────┘   │
             │                 │
             ▼                 │
   ┌───────────────────┐       │
   │ CHANGE INTAKE AMOUNT│── S112
   └───────────────────┘       │
             │                 │
             ▼◄────────────────────────┐
        ╱─────────╲        S121         │
       ╱           ╲         No         │
      ⟨ HAS CERTAIN ⟩──────────────────┘
      ⟨ PERIOD OF TIME ELAPSED? ⟩
       ╲           ╱
        ╲─────────╱
             │ Yes
             ▼
        ╱─────────╲        S122
       ╱           ╲         Yes
      ⟨   P2≤PT ?   ⟩───────────────────┐
       ╲           ╱                    │
        ╲─────────╱                     │
             │ No                       ▼      S123
             ▼                      ╱─────────╲
   ┌───────────────────┐          ╱           ╲   No
   │   ANALYSIS MODE   │── S131   ⟨ PREDETERMINED ⟩────┐
   └───────────────────┘          ⟨ NUMBER OF TIMES? ⟩ │
             │                     ╲           ╱       │
             ▼                      ╲─────────╱        │
   ┌───────────────────────┐            │ Yes  S124    │
   │ RETURN CLEANING GAS   │── S132      ▼              │
   │ INTRODUCTION FLOW RATE│      ┌──────────────┐      │
   └───────────────────────┘      │  ISSUE ALARM │      │
             │                     └──────────────┘      │
             ▼                            │              │
   ┌───────────────────┐                  ▼              │
   │ RETURN INTAKE AMOUNT│── S133       ( END )          │
   └───────────────────┘
```

# FIG. 5

```
                    ( START )
                        │
                        ▼
        ┌───────────────────────────────┐
        │        ANALYSIS MODE           │──── S201
        └───────────────────────────────┘
                        │
        ┌───────────────┼───────────────────────────┐
        │               ▼                            │
        │          ╱─────────────╲    S202           │
        │        ╱  HAS CERTAIN    ╲      No          │
        │       ╱ PERIOD OF TIME    ╲────────────────┤
        │        ╲   ELAPSED?      ╱                 │
        │          ╲─────────────╱                   │
        │               │ Yes                        │
        │               ▼                            │
        │  ┌───────────────────────────┐             │
        │  │       CLEANING MODE        │──── S203    │
        │  └───────────────────────────┘             │
        │               │                            │
        │               ▼                            │
        │  ┌───────────────────────────┐             │
        │  │   INCREASE CLEANING GAS    │──── S211    │
        │  │  INTRODUCTION FLOW RATE    │             │
        │  └───────────────────────────┘             │
        │               │                            │
        │               ▼                            │
        │  ┌───────────────────────────┐             │
        │  │     CHANGE INTAKE AMOUNT   │──── S212    │
        │  └───────────────────────────┘             │
        │               │                            │
        │               ▼◄──────────────────────────┐│
        │          ╱─────────────╲    S221          ││
        │        ╱  HAS CERTAIN    ╲     No          ││
        │       ╱ PERIOD OF TIME    ╲───────────────┘│
        │        ╲   ELAPSED?      ╱                  │
        │          ╲─────────────╱                    │
        │               │ Yes                         │
        │               ▼                             │
        │          ╱─────────────╲    S222            │
        │        ╱                 ╲     Yes          │
        │       ╱     P2 ≤ PT ?     ╲────────────┐    │
        │        ╲                 ╱             │    │
        │          ╲─────────────╱               │    │
        │               │ No                     │    │
        │               ▼                        ▼    │
        │  ┌──────────────────────┐       ╱─────────────╲  S223
        │  │     ANALYSIS MODE     │─S231 ╱ PREDETERMINED ╲  No
        │  └──────────────────────┘      ╲ NUMBER OF TIMES?╲──┘
        │               │                 ╲─────────────╱
        │               ▼                      │ Yes
        │  ┌──────────────────────┐            ▼        S224
        │  │  RETURN CLEANING GAS  │─S232  ┌──────────────┐
        │  │ INTRODUCTION FLOW RATE│       │  ISSUE ALARM │
        │  └──────────────────────┘       └──────────────┘
        │               │                      │
        │               ▼                      ▼
        │  ┌──────────────────────┐         ( END )
        └──│  RETURN INTAKE AMOUNT │─S233
           └──────────────────────┘
```

## FIG. 6

## FIG. 7

## FIG. 8

## FIG. 9

# FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012063796 A
- WO 2016027320 A
- JP H05076803 A
- JP S51123080 U